# EUROPÄISCHE PATENTSCHRIFT

(11) **EP 2 483 786 B1**
(45) Veröffentlichungstag und Bekanntmachung des Hinweises auf die Patenterteilung: **21.05.2014**
(21) Anmeldenummer: 10762651.7
(22) Anmeldetag: 01.10.2010
(51) Int. Cl.: G06F 13/38, G06F 13/40, G06F 1/26

(54) **KOMMUNIKATIONSKONVERTER ZUR VERBINDUNG EINES AUTOMATISIERUNGSGERÄTES MIT EINEM COMPUTER SOWIE VERFAHREN ZUR STEUERUNG DES KOMMUNIKATIONSKONVERTERS**
COMMUNICATION CONVERTER FOR CONNECTING AN AUTOMATION DEVICE TO A COMPUTER AND METHOD FOR CONTROLLING THE COMMUNICATION CONVERTER
CONVERTISSEUR DE COMMUNICATION POUR RELIER UN APPAREIL D'AUTOMATISATION À UN ORDINATEUR ET PROCÉDÉ POUR COMMANDER LE CONVERTISSEUR DE COMMUNICATION

(30) Priorität: 02.10.2009 DE 102009044172
(43) Veröffentlichungstag der Anmeldung: 08.08.2012
(73) Patentinhaber: Schneider Electric Automation GmbH, 97828 Marktheidenfeld (DE)
(72) Erfinder: HORTIG, Michael, 63263 Neu-Isenburg (DE); GOUTAUDIER, Philippe, FR-38000 Grenoble (FR); YE, Jun, Shanghai 200061 (CN); LI, Qing, Shanghai 200129 (CN)
(74) Vertreter: Stoffregen, Hans-Herbert
(86) Internationale Anmeldenummer: PCT/EP2010/064668
(87) Internationale Veröffentlichungsnummer: WO 2011/039355

(56) Entgegenhaltungen:
- EP-A2- 1 598 743
- DE-A1-102005 042 770
- US-A1- 2005 268 000
- US-A1- 2006 155 908
- US-A1- 2009 070 615

## Beschreibung

Die Erfindung bezieht sich auf einen Kommunikationskonverter zur Verbindung von Automatisierungsgeräten mit unterschiedlicher Betriebsspannung mit einem Host-Computer, **nach dem Oberbegriff des Anspruch 1** sowie auf ein Verfahren zur Steuerung des Kommunikationskonverters zur Verbindung von unterschiedliche Betriebsspannungen aufweisenden Automatisierungsgeräten mit einem Host-Computer, **nach dem Oberbegriff des Anspruch 5.**

Ein Kommunikationskonverter der eingangs genannten Art als Bestandteil eines Datenübertragungskabels ist beispielsweise in der EP-A-1 598 743 beschrieben. Dieses Datenübertragungskabel, welches zur Verbindung eines mobilen Kommunikationsterminals mit einem Computer ausgebildet ist, umfasst einen USB-Stecker, welcher mit einem USB-Port eines Personalcomputers verbindbar ist, einen Endstecker, welcher mit einem UART-Port des mobilen Kommunikationsterminals verbindbar ist, einen Kommunikationswandler-Chip in einem der Stecker, welcher die Signale von USB nach UART konvertiert sowie eine Vielzahl von Übertragungsleitungen, welche den USB-Stecker mit dem Endstecker verbinden.

Bei der bekannten Ausführungsform sind in dem Endstecker der Kommunikationswandler-Chip sowie ein DC-DC-Wandler-Chip integriert. Die Datensignale des Computers und des Kommunikationsterminals werden über den Kommunikationswandler-Chip zwischen dem UART-Port und dem USB-Port übertragen. Eine Spannungsquelle des USB-Ports wird mit dem Kommunikationswandler-Chip und mit dem DC-DC-Wandler-Chip verbunden, wobei ein Ausgang des DC-DC-Wandlers eine Gleichspannung für den UART-Port bereitstellt.

Aus Obigem ergibt sich, dass für Endgeräte mit unterschiedlichen Versorgungsspannungen unterschiedliche Datenübertragungskabel eingesetzt werden müssen, was betreffend Herstellung, Lagerhaltung und Anwendung nachteilig ist.

Insbesondere im Bereich der Automatisierungstechnik existieren Automatisierungsprodukte, deren Kommunikationsschnittstellen unterschiedliche Spannungspegel benötigen.

Beispielsweise wird zur Kommunikation zwischen einem Personalcomputer und einem Automatisierungsgerät ein netzwerk-kompatibler Schnittstellen-Standard RS485 bzw. EIA 485 zur Programmierung, Konfiguration und Überwachung des Automatisierungsgerätes eingesetzt. Grundsätzlich wird zur Verbindung des Personalcomputers mit dem Automatisierungsprodukt ein Kommunikationskonverter benötigt, um die Signale der USB- oder RS232-Schnittstelle des Personalcomputers auf die RS485-Schnittstelle zu konvertieren.

Der RS485-Standard benutzt ein Leitungspaar, um einen invertierten und einen nicht invertierten Pegel eines 1-Bit-Datensignals zu übertragen. Der RS485-Schnittstellen-Standard spezifiziert nur die elektrischen Eigenschaften des Interfaces und definiert kein Protokoll und auch keine Steckerbelegung. Das Protokoll kann anwendungsspezifisch gewählt werden. Da keine einheitliche Pin-Belegung eines RS485-Steckers existiert, muss bei Verwendung verschiedener RS485-Geräte immer die Dokumentation des jeweiligen Gerätes beachtet werden, mit der Folge, dass gerätespezifische Konverter bzw. Datenübertragungskabel eingesetzt werden müssen.

Sollen Daten übertragen werden, bedient man sich des Universal Asynchronous Receiver- Transmitter-Protokolls (UART), welches von RS232-Schnittstellen bekannt ist.

Ergänzend zu den bereits oben genannten Kommunikationsleitungen der RS485-Schnittstelle können andere Leitungen der Schnittstelle für Signale verwendet werden, die optional auf Geräteseiten implementiert werden können. Diese können im Bedarfsfall verwendet werden, um das Gerät beispielsweise auf eine spezifische Betriebsart zu setzen oder um eine gerätespezifische Spannung bereitzustellen.

Die Unterstützung dieser Signale ist erforderlich, um eine Kommunikation mit dem dezidierten Gerät zu ermöglichen. Grundsätzlich ist es nicht möglich, alle Signale für die Spannungsversorgung freizugeben, da der für das jeweilige Gerät richtige Spannungswert zur Verfügung gestellt werden muss.

Das Management dieser Signale kann derzeit auf zwei verschiedenen Wegen realisiert werden:
- Die Einstellungen werden über Software gesteuert, wodurch die Software-Entwicklung erschwert wird,
- spezielle Kabel müssen entworfen werden, um die Erfordernisse für ein spezifisches Gerät zu erfüllen, welches daher nur für diesen Gerätetyp kompatibel ist.

Die US-A-2006/0155908 bezieht sich auf ein Isolationssystem zur Kopplung von Feldbusdaten an ein Netzwerk. Das System umfasst einen Daten-Format-Konverter, welcher die Daten zu USB-Daten konvertiert. Ferner umfasst das System einen Koppler, umfassend eine erste Isolations-Barriere, die in Kaskade mit dem Konverter verbunden ist. Ein Host-Computer empfängt die USB-Daten. Der Host-Computer umfasst ein Daten-Server-Interface und eine Netzwerkverbindung. Ferner ist ein Spannungswandler vorgesehen, welcher die Energieversorgung zwischen dem Host-Computer und dem Feldbus koppelt, wobei der Spannungswandler eine zweite Isolations-Barriere umfasst.

Die US-A-2009/0070615 bezieht sich auf ein Vielfach-Spannungsversorgungs-Management-System eines Energie-über-Ethernet Systems (Power over Ethernet (PoE)).

Das PoE-Kommunikationssystem liefert PoE an ein oder mehrere spannungsbetriebene Geräte, welche eine oder mehrere DC-Spannungsversorgungen verwenden. Dazu umfasst das PoE-Kommunikationssystem einen Spannungswandler, welcher eine oder mehrere DC-Spannungsversorgungen basierend auf den dynamischen Ansprüchen von einem oder mehreren Geräten überwacht, unter Verwendung von Energie-Status-Indikatoren, welche über ein Energie-Bank-Daten-Interface empfangen werden.

**Die** DE-A-10 2005 042 770 **bezieht sich auf ein Mehrfach-Verbindungsgerät, umfassend einen USB-Anschluss eine Steuerung und eine Spannungsermittlungsvorrichtung. Der USB-Anschluss ist mit einem Peripheriegerät verbunden. Die Spannungsermittlungsvorrichtung ist mit dem USB-Anschluss verbunden, um ein Spannungserfassungssignal zu erzeugen. Die Steuerung empfängt das Spannungserfassungssignal und bestimmt den Typ des verbundenen Peripheriegerätes gemäß dem Spannungserfassungssignal.**

Davon ausgehend liegt der vorliegenden Erfindung die Aufgabe zu Grunde, einen Kommunikationskonverter der eingangs genannten Art derart weiterzubilden, dass dieser mit Geräten unterschiedlichen Schnittstellen-Standards wie RS485 und RS232 kommunizieren kann **und an Geräte mit unterschiedlichen Betriebsspannungen anpassbar ist.**

Die Aufgabe wird erfindungsgemäß **durch die Merkmale des Anspruchs 1 gelöst.**

Vorzugsweise ist die Logikeinheit als Mikrocontroller ausgebildet, der von einer Firmware gesteuert wird. Ein Update der Firmware kann über die USB-Schnittstelle erfolgen.

In bevorzugter Weise ist der Kommunikationskonverter integraler Bestandteil eines Verbindungskabels, wobei der Kommunikationskonverter in einem der Endstecker des Verbindungskabels oder im Verlauf des Verbindungskabels integriert sein kann.

In einer weiteren bevorzugten Ausführungsform kann die Host-Schnittstelle eine USB-Schnittstelle oder eine Fire Wire (IEEE-1394)- Schnittstelle sein, während die Geräte-Schnittstelle als serielle Schnittstelle nach RS485 oder RS232 Standard ausgebildet ist.

Gemäß einer bevorzugten Verfahrensweise wird die Aufgabe **durch die Merkmale des Anspruchs 5 gelöst.**

Zur Steuerung des Kommunikationskonverters ist es notwendig, eine Rückkopplung von dem Automatisierungsgerät zu erhalten, um die geeignete Spannung zu identifizieren und auszuwählen. Ein Rückkopplungs-Parameter ist der Stromverbrauch des Gerätes, wenn dieses mit einer Spannung versorgt wird. Ein zweiter Rückkopplungs-Parameter ist ein CTRL-Signal auf der Steuerleitung, welches einen definierten Spannungspegel aufweist und typischerweise verwendet wird, um das Automatisierungsgerät in eine spezifische Betriebsart zu schalten.

Für die hier beschriebene Lösung unterstützt jedes Gerät das CTRL-Signal, um den Konverter in die Lage zu versetzen, dieses Signal zu erkennen und als Rückkopplungs-Signal zu benutzen. Ein definierter CTRL-Spannungswert ist dabei unabhängig von der Nennspannung, die auf Geräteseite benötigt wird.

Die Relation zwischen dem an die Spannungsversorgungsleitung angelegten Spannungswert und dem auf der Steuerleitung CTRL aktiven Spannungswert wird verwendet, um zwischen verschiedenen Gerätetypen zu unterscheiden.

Mit steigender Versorgungsspannung wird der Spannungswert auf der Steuerleitung steigen bis eine Nennversorgungsspannung erreicht wird. Die Spannung auf der Steuerleitung hat dann ihren definierten Wert.

Um den richtigen Spannungswert zu detektieren, startet der Kommunikationskonverter Tests mit einem niedrigsten Spannungswert, welcher von diesem unterstützt wird und überwacht den Spannungswert auf der Steuerleitung, welcher durch den Konverter an der Geräteseite gemessen wird.

Wenn der Spannungswert auf der Steuerleitung den definierten Spannungswert erreicht hat, wurde die richtige Versorgungsspannung gefunden. Wenn der Spannungswert auf der Steuerleitung CTRL > 0 Volt und kleiner als der definierte Spannungswert ist, erhöht der Kommunikationskonverter die Versorgungsspannung auf einen nächsthöheren Spannungswert, der von dem Konverter unterstützt wird. Der Spannungswert auf der Steuerleitung wird erneut gemessen und mit dem definierten Spannungswert verglichen. Abhängig von dem Ergebnis des Vergleichs wird entweder der richtige Spannungswert gefunden und dem Automatisierungsgerät zugeführt oder die Test-Sequenz wird weiter durchgeführt, bis der richtige Spannungswert gefunden wird.

Der Vorteil der auf einem Mikrocontroller basierten Lösung stellt eine "Stand-alone-Lösung" bereit, welche zu unterschiedlichen Schnittstellen-Implementationen kompatibel ist, unabhängig von der Verwendung von zusätzlichen Signalen. Es wird ein einziger Kommunikationskonverter oder ein einziges Kabel mit integriertem Kommunikationskonverter für viele Geräte bereitgestellt, ohne jeglichen Einfluss auf die Software-Entwicklung. Des Weiteren ist eine Anwendung nach "Plug and Play" möglich, ohne dass Entstellungen von einem Benutzer vorgenommen werden müssen.

Kerngedanke der Erfindung ist ein einziger universeller und intelligenter Konverter, welcher die angeschlossenen Geräte erkennt und die entsprechenden Spannungssignale liefert.

Es zeigen:
- Fig. 1: ein schematisches Blockschaltbild einer Kommunikationsverbindung zwischen einem Personalcomputer und einem Automatisierungsgerät
- Fig. 2: ein Zustandsdiagramm zur Steuerung der Spannungsversorgung und zusätzlicher Signale und

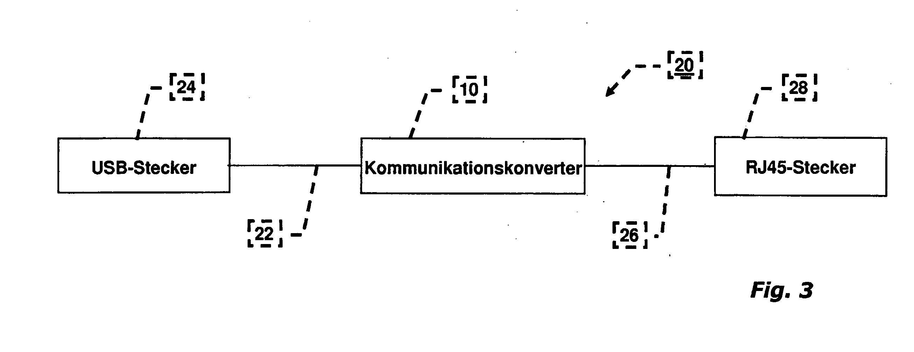

- Fig. 3: eine schematische Darstellung eines Kommunikationskabels .

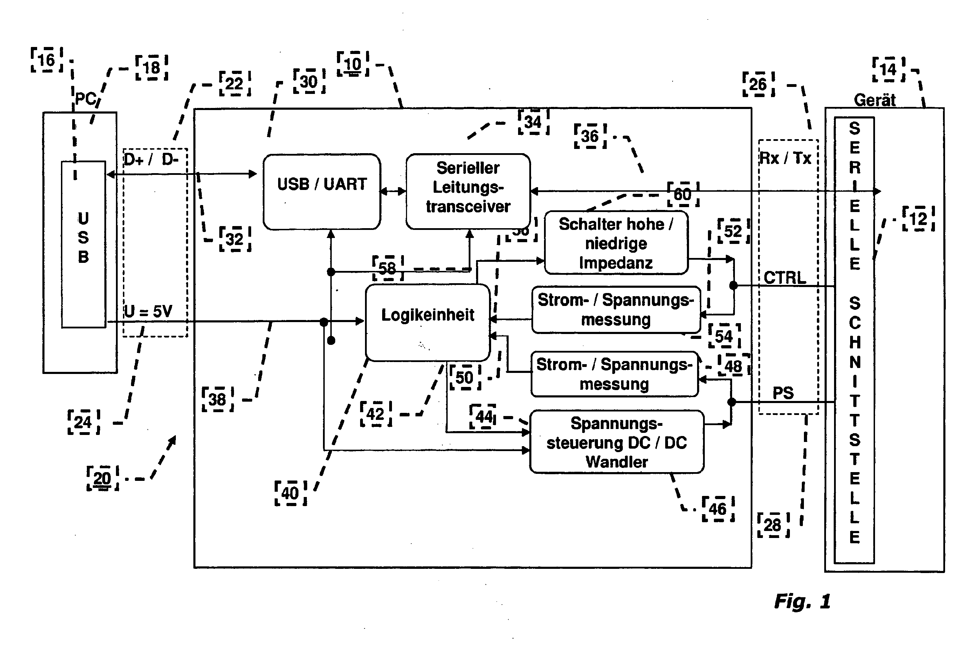

Fig. 1 zeigt rein schematisch einen Kommunikationskonverter 10 zur Verbindung einer seriellen Geräte-Schnittstelle 12 wie RS485- oder RS232-Schnittstelle eines Automatisierungsgerätes 14 mit einer Host-Schnittstelle 16 wie USB-Schnittstelle oder IEEE1394- Schnittstelle (FireWire) eines Host-Computers 18.

Im beschriebenen Ausführungsbeispiel ist der Kommunikationskonverter 10 integraler Bestandteil eines Kommunikationskabels 20, an dessen erstem Ende 22 ein Host-Stecker 24 wie USB-Stecker zur Verbindung mit der Host-Schnittstelle 16 des Host-Computers 18 verbunden ist und an dessen zweitem Ende 26 ein Geräte-Stecker 28 wie RJ45-Stecker zur Verbindung mit der seriellen Geräte-Schnittstelle 12 des Automatisierungsgerätes 14 vorgesehen ist.

Der Kommunikationskonverter 10 umfasst einen Schnittstellen-Baustein 30, der eingangsseitig mit Datenleitungen 32 der Host-Schnittstelle 16 verbindbar ist und ein komplettes USB-Protokoll automatisch abarbeiten kann. Ausgangsseitig ist der Schnittstellen-Baustein 30 mit einem seriellen Sende-/Empfänger-Baustein 34 verbunden, der über Datenleitungen 36 mit der seriellen Geräte-Schnittstelle 12 des Automatisierungsgerätes 14 verbindbar ist.

Sowohl der Schnittstellen-Baustein 30 als auch der serielle Sende-/Empfänger-Baustein 34 werden über eine Spannungsversorgungsleitung 38 der Host-Schnittstelle 16 mit Spannung versorgt.

Um eine automatische Einstellung einer für das an dem Kommunikationskonverter 10 angeschlossene Automatisierungsgerät 14 definierten Betriebsspannung zu ermöglichen, weist der Kommunikationskonverter 10 eine Logik-Einheit 40 auf, die vorzugsweise als Mikrocontroller ausgeführt ist. Ein Ausgang 42 der Logik-Einheit 40 ist mit einem Steuereingang 44 eines Spannungswandlers 46 verbunden, der als steuerbarer DC-/DC-Wandler ausgebildet ist. Ein Ausgang des Spannungswandlers 46 ist mit einer Spannungsversorgungsleitung PS der seriellen Geräte-Schnittstelle 12 verbindbar, um das Automatisierungsgerät 14 mit geeigneter Spannung zu versorgen.

Gleichzeitig ist der Ausgang des Spannungswandlers 46 über eine erste Strom-/Spannungs-Messeinheit 48 auf einen Eingang 50 der Logik-Einheit 40 rückgekoppelt.

Zusätzlich zu den Datenübertragungsleitungen 36, die als RX-/TX-Leitungen bezeichnet werden können, umfasst die serielle Geräte-Schnittstelle 12 ergänzend die Spannungsversorgungsleitung PS sowie eine Steuersignalleitung CTRL, die mit einem Eingang 52 einer zweiten Strom-/Spannungsmesseinheit 54 verbunden ist, die ausgangsseitig mit einem Eingang 56 der Logik-Einheit 40 verbunden ist, um die Strom-/Spannungszustände der Steuerleitung CTRL zu erfassen. Ein weiterer Ausgang 58 der Logik-Einheit 40 ist mit einem Impedanzschalter 60 verbunden, dessen Ausgang mit der Steuersignalleitung CTRL verbunden ist und der über die Strom-/Spannungsmesseinheit 54 auf den Eingang 56 der Logik-Einheit rückgekoppelt ist. Über dem Schaltmittel wie Impedanzschalter 60 kann die Impedanz der Steuerleitung 60 auf eine hohe Impedanz H oder eine niedrige Impedanz L gesteuert werden.

Zur Steuerung des Kommunikationskonverters 20 ist es notwendig, eine Rückkopplung von dem Automatisierungsgerät 14 zu erhalten, um die geeignete Spannung zu identifizieren und auszuwählen. Ein Rückkopplungs-Parameter ist der Stromverbrauch des Gerätes 14, wenn dieses mit einer Spannung versorgt wird. Ein zweiter Rückkopplungs-Parameter ist ein CTRL-Signal auf der Steuerleitung CTRL, welches einen definierten Spannungspegel aufweist und typischerweise verwendet wird, um das Automatisierungsgerät 14 in eine spezifische Betriebsart zu schalten.

Für die hier beschriebene Lösung unterstützt jedes Gerät das CTRL-Signal, um den Konverter in die Lage zu versetzen, dieses Signal zu erkennen und als Rückkopplungs-Signal zu benutzen. Ein definierter CTRL-Spannungswert ist dabei unabhängig von der Nennspannung, die auf Geräteseite benötigt wird.

Die Relation zwischen dem an die Spannungsversorgungsleitung PS angelegten Spannungswert und dem auf der Steuerleitung CTRL aktiven Spannungswert wird verwendet, um zwischen verschiedenen Gerätetypen zu unterscheiden.

Mit steigender Versorgungsspannung wird der Spannungswert auf der Steuerleitung CTRL steigen bis eine Nennversorgungsspannung Un erreicht wird. Die Spannung auf der Steuerleitung CTRL hat dann ihren definierten Wert.

Um den richtigen Spannungswert zu detektieren, startet der Kommunikationskonverter 10 Tests mit einem niedrigsten Spannungswert, welcher von diesem unterstützt wird und überwacht den Spannungswert auf der Steuerleitung CTRL, welcher durch den Konverter 10 an der Geräteseite gemessen wird.

Wenn der Spannungswert auf der Steuerleitung CTRL den definierten Spannungswert erreicht hat, wurde die richtige Versorgungsspannung gefunden. Wenn der Spannungswert auf der Steuerleitung CTRL > 0 Volt und kleiner als der definierte Spannungswert ist, erhöht der Kommunikationskonverter 10 die Versorgungsspannung auf einen nächsthöheren Spannungswert, der von dem Konverter 10 unterstützt wird. Der Spannungswert auf der Steuerleitung CTRL wird erneut gemessen und mit dem definierten Spannungswert verglichen. Abhängig von dem Ergebnis des Vergleichs wird entweder der richtige Spannungswert gefunden und dem Automatisierungsgerät zugeführt oder die Test-Sequenz wird weiter durchgeführt, bis der richtige Spannungswert gefunden wird.

Während des Spannungs-Tests ist die Leitung CTRL hochohmig. Wenn der Kommunikationskonverter 10 die Betriebsspannung auf der Versorgungsleitung PS bereitstellt, wird die Steuerleitung CTRL auf niedrige Impedanz L gesetzt, um das Signal auf der Steuerleitung CTRL für das angeschlossene Automatisierungsgerät 14 bereitzustellen. Der Strom über die Versorgungsleitung PS wird überwacht und zur Detektion verwendet, ob der Kommunikationskonverter 10 von dem Automatisierungsgerät 14 getrennt wurde. Wenn der Strom auf 0 Ampere abfällt, wurde der Kommunikationskonverter 10 getrennt und der Kommunikationskonverter 10 startet den Detektionsvorgang erneut.

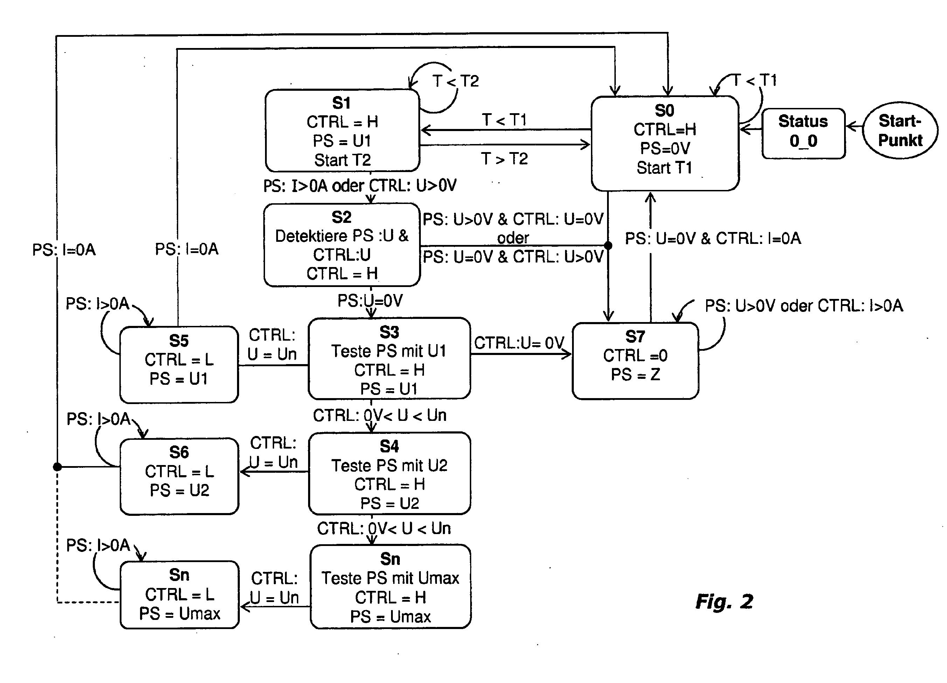

Die Funktion des Kommunikationskonverters 10 soll nachfolgend anhand des in Fig. 2 dargestellten Zustandsdiagramms erläutert werden.

Ausgehend von einem Startpunkt mit dem Zustand 0_0 wird in einem Zustand S0 davon ausgegangen, dass die Steuerleitung CTRL eine hohe Impedanz H und eine Spannung U auf der Spannungsversorgungsleitung PS 0 Volt ist. Ein Timer T1 wird gestartet. Ändern sich die Pegel der Leitungen CTRL und PS nicht, verbleibt der Konverter 10 im Zustand S0.

In einem Zustand S1 wird über den Spannungswandler 46 ein Spannungswert U1, der dem niedrigsten durch den Konverter unterstützten entspricht, auf die Spannungsversorgungsleitung PS gelegt und ein Timer T2 gestartet.

Gleichzeitig werden die Leitungen PS und CTRL mittels der Strom-/Spannungsmesseinheiten 48, 54 überwacht. Sofern der Strom auf der Leitung PS > 0 Ampere oder die Spannung auf der Leitung CTRL > 0 Volt ist, wird in den Zustand S2 gewechselt. Anderenfalls wird zurück in den Zustand S0 gewechselt.

Im Zustand S2 wird der Spannungswert auf den Leitungen PS und CTRL detektiert. Die Leitungen sind auf hohe Impedanz H geschaltet.

Ist die Spannung auf der Leitung PS > 0 Volt und auf der Leitung CTRL = 0 Volt oder auf der Leitung PS = 0 Volt und auf der Leitung CTRL > 0 Volt, wird in den Zustand S7 gewechselt, in dem die Leitung PS hochohmig (keine Spannung vom Konverter) und CTRL auf niedrige Impedanz L geschaltet wird.

Beträgt die Spannung im Zustand S2 an der Versorgungsleitung PS 0 Volt, wird in den Zustand S3 gewechselt. Die Versorgungsleitung PS wird mit der Spannung U1 beaufschlagt, während die Steuerleitung CTRL eine hohe Impedanz H aufweist. Gleichzeitig wird die Spannung der Steuerleitung CTRL mittels des Strom-/Spannungsmesseinheit 54 überwacht. Sofern diese Spannung = 0 Volt ist, geht die Schaltung in den Zustand S7 über.

Sollte die an der Steuerleitung CTRL anliegende Spannung der Nennspannung Un des CTRL-Signals entsprechen, wechselt die Schaltung in den Zustand S5, in dem die Steuerleitung CTRL auf niedrigen Impedanz Z und die Versorgungsleitung PS auf Versorgungsspannung U1 gesetzt wird.

Ist ein Stromfluss über die Versorgungsleitung PS > 0 Ampere, verbleibt die Schaltung im Zustand S5. Sollte der Stromfluss über die Versorgungsleitung PS 0 Ampere betragen, wechselt die Schaltung in den Zustand S0.

Der Zustand S3 wechselt in einen Zustand S4, wenn eine Spannung an der Steuerleitung CTRL zwischen 0 Volt ≤ U ≤ UN (Nennspannung des CTRL-Signals) liegt. Im Zustand S4 wird die Versorgungsleitung PS mit einer Spannung U2 (U2 > U1) beaufschlagt, während die Steuerleitung CTRL eine hohe Impedanz Z aufweist.

Sofern die an der Steuerleitung anliegende Spannung U der Nennspannung UN entspricht, geht die Schaltung in den Zustand S6 über, in dem die Steuerleitung CTRL eine niedrige Impedanz L und die Versorgungsleitung PS eine Spannung U2 aufweist. Die Schaltung verbleibt im Zustand S6, sofern ein Stromfluss über die Versorgungsleitung PS > 0 Ampere ist. Anderenfalls geht die Schaltung in den Zustand S0 über.

Die Zustände S4 und S6 werden entsprechend der gewünschten Gerätespannung durchgeführt, mit dem Ziel, dass an der Versorgungsleitung PS die für das Gerät 14 geeignete Spannung U1, U2 ... UMAX anliegt.

Aus dem Zustand S7, in dem die Steuerleitung eine niedrige Impedanz L und die Versorgungsleitung PS den Zustand 0 Volt aufweist, verbleibt die Schaltung in dem Zustand S7, wenn die Spannung an der Versorgungsleitung PS > 0 Volt ist oder der Strom I über die Steuerleitung CTRL > 0 Ampere beträgt.

Sollte die Spannung U der Versorgungsleitung PS 0 Volt und der Strom I über die Steuerleitung CTRL ebenfalls Null Ampere betragen, geht die Schaltung in den Zustand S0 über. Die Detektierungssequenz wird neu gestartet.

Bei Geräten, die extern mit Spannung versorgt werden, d. h. die nicht über das Kommunikationsinterface 10 mit Spannung versorgt werden, kann zwischen drei verschiedenen Gerätetypen unterschieden werden:
1) Gerät vom Typ "A", welches selbst Spannung an der systemkonformen Interface-Verbindung bereitstellt,
2) Gerät vom Typ "B", welches keine Spannungsversorgungsleitung verwendet, jedoch zusätzliche Signale an der Geräte-Schnittstelle unterstützt und
3) Gerät vom Typ "C", welches keine Spannungsversorgung und kein optionales CTRL-Signal unterstützt.

Bei diesen drei Gerätetypen ist eine Spannungsversorgung durch den Kommunikationskonverter 10 bzw. das Kommunikationskabel nicht notwendig. Bei den Gerätetypen "A" und "B" kann die existierende Spannungsversorgung bzw. das CTRL-Signal von dem Kommunikationskonverter verwendet werden, um zu erkennen, dass eine Spannungsversorgung nicht notwendig ist. Die Spannungsversorgungs-Fähigkeit des Kommunikationskonverters ist bei Geräten dieses Typs ausgeschaltet.

Bei Geräten nach dem Typ "C" ist kein Rückkopplungs-Signal zugänglich. Somit würden die in dem Status-Diagramm beschriebenen Zustände kontinuierlich laufen. Aufgrund der fehlenden internen Verbindung der Versorgungsleitung bei diesem Gerätetyp wird kein Strom fließen. Somit wird die Spannungs-Testung nach Anlegen der geringsten Spannung gestoppt.

## Patentansprüche

1. Kommunikationskonverter (10) zur Verbindung von Automatisierungsgeräten (14) mit unterschiedlicher Betriebsspannung mit einem Host-Computer (18), umfassend einen Schnittstellen-Baustein (30) zur Konvertierung von zu übertragenen Daten sowie einen mit dem Schnittstellen-Baustein (30) gekoppelten Sende-/Empfangs-Baustein (34), wobei der Schnittstellen-Baustein (30) eingangsseitig über einen Host-Stecker (24) mit einer Host-Schnittstelle (16) des Host-Computers (18) und der Sende-/Empfangs-Baustein (34) über einen Geräte-Stecker (28) mit einer Geräte-Schnittstelle (12) des Automatisierungsgerätes (14) verbindbar ist, sowie einen Spannungswandler (46), welcher eingangsseitig über die Host-Schnittstelle (16) mit Betriebsspannung und ausgangsseitig mit einer Spannungsversorgungsleitung (PS) der Geräte-Schnittstelle (12) verbindbar ist,
wobei eine Ausgangsspannung des Spannungswandlers (46) an die Spannungsversorgungsleitung (PS) angelegt ist und wobei das Automatisierungsgerät (14) über die Spannungsversorgungsleitung (PS) der Geräte-Schnittstelle (12) mit der Ausgangsspannung versorgt ist,
**dadurch gekennzeichnet,**
**dass** der Kommunikationskonverter (10) eine erste Strom-/Spannungsmesseinrichtung (48) zur Erfassung eines Stroms bzw. einer Spannung der Spannungsversorgungsleitung (PS), eine zweite Strom-/Spannungsmesseinrichtung (54) zur Erfassung eines Stroms bzw. einer Spannung einer Steuerleitung (CTRL) der Geräte-Schnittstelle (12) sowie ein Schaltmittel (60) zur Steuerung einer Impedanz der Steuerleitung (CTRL) aufweist, dass der Spannungswandler (46) als steuerbarer Spannungswandler ausgebildet ist, wobei die Ausgangsspannung des Spannungswandlers (46) mittels einer in dem Kommunikationskonverter (10) integrierten Logik-Einheit (40) in Abhängigkeit von dem an der Steuerleitung (CTRL) anliegenden Strom-/Spannungswert und dem an der Spannungsversorgungsleitung (PS) anliegenden Strom-/Spannungswert sukzessive auf einen höheren Spannungswert steuerbar ist, und dass während der sukzessiven Erhöhung der Ausgangsspannung der Strom-/Spannungswert auf der Steuerleitung (CTRL) mittels der zweiten Strom-/Spannungsmesseinrichtung (54) überwacht wird und dann, wenn der Strom-/Spannungswert auf der Steuerleitung (CTRL) einen definierten Spannungswert erreicht hat, die für das angeschlossene Automatisierungsgerät (14) erforderliche Betriebsspannung eingestellt ist.

2. Kommunikationskonverter nach Anspruch 1,
**dadurch gekennzeichnet,**
**dass** ein Ausgang (42) der Logik-Einheit (40) mit einem Steuereingang (44) des Spannungswandlers (46) verbunden ist und dass ein Ausgang des Spannungswandlers (46) über die erste Strom-/Spannungsmesseinrichtung (48) auf einem Eingang (50) der Logik-Einheit (40) rückgekoppelt ist.

3. Kommunikationskonverter nach Anspruch 1 oder 2,
**dadurch gekennzeichnet,**
**dass** die Steuerleitung (CTRL) über die zweite Strom-/Spannungsmesseinrichtung (54) mit einem Eingang (56) der Logik-Einheit (40) verbunden ist.

4. Kommunikationskonverter nach zumindest einem der vorhergehenden Ansprüche,
**dadurch gekennzeichnet,**
**dass** die Steuerleitung (CTRL) über das Schaltmittel wie Impedanz-Schalter (60), gesteuert über einen Ausgang (58) der Logik-Einheit, von einer niedrigen Impedanz (Z) auf eine hohe Impedanz (Z) und umgekehrt steuerbar ist.

5. Verfahren zur Steuerung einer Ausgangsspannung eines Kommunikationskonverters (10) zur Verbindung von unterschiedliche Betriebsspannungen aufweisenden Automatisierungsgeräten (14) mit einem Host-Computer (18), wobei der Kommunikationskonverter (10) einen Schnittstellen-Baustein (30) zur Konvertierung von zu übertragenen Daten sowie einen mit dem Schnittstellen-Baustein (30) gekoppelten Sende-/Empfangsbaustein (34) aufweist und wobei der Schnittstellen-Baustein (30) eingangsseitig über einen Host-Stecker mit einer Host-Schnittstelle des Host-Computers und der Sende-/Empfangs-Baustein über einen Geräte-Stecker des Automatisierungsgerätes verbunden wird, sowie einen Spannungswandler (46), welcher eingangsseitig über die Host-Schnittstelle mit Betriebsspannung versorgt wird und ausgangsseitig das Automatisierungsgerät über eine Spannungsversorgungsleitung (PS) der Geräte-Schnittstelle (12) mit der Ausgangsspannung versorgt,
**dadurch gekennzeichnet,**
**dass** mittels einer in dem Kommunikationskonverter integrierten Logik-Einheit (40) ein Signalzustand auf der Spannungsversorgungsleitung (PS) der Geräte-Schnittstelle (12) und einer Steuerleitung (CTRL) der Geräte-Schnittstelle (12) erfasst wird und dass in Abhängigkeit der Strom-/Spannungswerte der Steuerleitung (CTRL) und der Spannungsversorgungsleitung (PS) die Ausgangsspannung des Spannungswandlers (46) auf die Betriebsspannung des angeschlossenen Automatisierungsgeräts (14) eingestellt wird, wobei über die Logik-Einheit (40) und den steuerbaren Spannungswandler (46), ausgehend von einem niedrigen Spannungswert, die Ausgangsspannung sukzessiv erhöht wird, wobei gleichzeitig ein Spannungswert auf der Steuerleitung (CTRL) überwacht wird und dann, wenn der Spannungswert auf der Steuerleitung (CTRL) einen definierten Spannungswert erreicht hat, die für das angeschlossene Automatisierungsgerät (14) erforderliche Betriebsspannung eingestellt ist

6. Verfahren nach Anspruch 5,
**dadurch gekennzeichnet,**
**dass** mittels einer Strom-/Spannungsmesseinheit (48) ein Stromfluss über die Spannungsversorgungsleitung (PS) erfasst wird.

7. Verfahren nach einem der Ansprüche 5 bis 6,
**dadurch gekennzeichnet,**
**dass** eine Relation zwischen der an der Spannungsversorgungsleitung (PS) angelegten Ausgangsspannung des Konverters (10) und einem an der Steuerleitung (CTRL) erfassten Spannungswert verwendet wird, um zwischen verschiedenen Typen von Automatisierungsgeräten (14) zu unterscheiden.

8. Verfahren nach einem der Ansprüche 5 bis 7,
**dadurch gekennzeichnet,**
**dass** der Spannungswert der Ausgangsspannung auf einen nächsthöheren Spannungswert erhöht wird, wenn der Spannungswert auf der Steuerleitung (CTRL) größer Null Volt und kleiner als der definierte Spannungswert ist.

9. Verfahren nach einem der Ansprüche 5 bis 8,
**dadurch gekennzeichnet,**
**dass** der Strom über die Spannungsversorgungsleitung (PS) überwacht und zur Detektion verwendet wird, ob der Kommunikationskonverter (10) von dem Automatisierungsgerät (14) getrennt wurde.

## Claims

1. Communication converter (10) for connecting automation devices (14) with different operating voltage with a host computer (18), comprising an interface component (30) for converting data to be transmitted and a transceiver component (34) coupled to the interface component (30), wherein the interface component (30) is connectable at the input side via a host connector (24) to a host interface (16) of the host computer (18) and the transceiver component (34) is connectable via a device connector (28) to a device interface (12) of the automation device (14), as well as a voltage transformer (46), which is connectable at the input side via the host interface (16) with operating voltage and at the output side to a voltage supply line (PS) of the device interface (12), wherein an output voltage of the voltage transformer (46) is applied to the voltage supply line (PS) and wherein the automation device (14) is supplied with the output voltage via the voltage supply line (PS) of the device interface (12),
**characterized in**
**that** the communication converter (10) has a first current/voltage meter (48) to detect a current or a voltage of the voltage supply line (PS), a second current/voltage meter (54) to detect a current or a voltage of a control line (CTRL) of the device interface (12), and a switching means (60) to control an impedance of the control line (CTRL), and in that the voltage transformer (46) is configured as a controllable voltage transformer, wherein the output voltage of the voltage transformer (46) is controllable successively to a higher voltage value by means of a logic unit (40) integrated in the communication converter (10) in dependence on the current/voltage value present on the control line (CTRL) and the current/voltage value present on the voltage supply line (PS), and in that during the successive raising of the output voltage the current/voltage value on the control line (CTRL) is monitored by the second current/voltage meter (54) and when the current/voltage value on the control line (CTRL) has reached a defined voltage value the operating voltage necessary for the connected automation device (14) is set.

2. Communication converter according to claim 1,
**characterized in**
**that** an output (42) of the logic unit (40) is connected to a control input (44) of the voltage transformer (46) and in that an output of the voltage transformer (46) is fed back across the first current/voltage meter (48) to an input (50) of the logic unit (40).

3. Communication converter according to claim 1 or 2,
**characterized in**
**that** the control line (CTRL) is connected via the second current/voltage meter (54) to an input (56) of the logic unit (40).

4. Communication converter according to at least one of the preceding claims,
**characterized in**
**that** the control line (CTRL) is controllable via the switching means, such as an impedance switch (60), controlled via an output (58) of the logic unit, from a low impedance (Z) to a high impedance (Z) and vice versa.

5. Method for controlling an output voltage of a communication converter (10) for connecting automation devices (14) having different operating voltages with a host computer (18), wherein the communication converter (10) has an interface component (30) for converting data to be transmitted and a transceiver component (34) coupled to the interface component (30), and wherein the interface component (30) is connected at the input side via a host connector to a host interface of the host computer and the transceiver component is connected via a device connector of the automation device, as well as a voltage transformer (46), which at the input side is fed with operating voltage via the host interface and at the output side supplies the automation device with the output voltage via a voltage supply line (PS) of the device interface (12),
**characterized in**
**that** by means of a logic unit (40) integrated in the communication converter is detected a signal status on the voltage supply line (PS) of the device interface (12) and a control line (CTRL) of the device interface (12), and in that the output voltage of the voltage transformer (46) is adjusted to the operating voltage of the connected automation device (14) in dependence on the current/voltage values of the control line (CTRL) and the voltage supply line (PS), wherein the output voltage is increased successively via the logic unit (40) and the controllable voltage transformer (46), starting from a low voltage value, while at the same time a voltage value is monitored on the control line (CTRL) and, when the voltage value on the control line (CTRL) has reached a defined voltage value, the required operating voltage for the connected automation device (14) is set.

6. Method according to claim 5,
**characterized in**
**that** by means of a current/voltage meter (48) a current flow across the voltage supply line (PS) is detected.

7. Method according to one of claims 5 to 6,
**characterized in**
**that** a relation between the output voltage of the converter (10) applied to the voltage supply line (PS) and a voltage value detected on the control line (CTRL) is used to distinguish between different types of automation devices (14).

8. Method according to one of claims 5 to 7,
**characterized in**
**that** the voltage value of the output voltage is increased to a next higher voltage value when the voltage value on the control line (CTRL) is greater than zero volts and less than the defined voltage value.

9. Method according to one of claims 5 to 8,
**characterized in**
**that** the current across the voltage supply line (PS) is monitored and used for detection whether the communication converter (10) has been separated from the automation device (14).

## Revendications

1. Convertisseur de communication (10) destiné à relier des appareils d'automatisation (14) présentant des tensions de fonctionnement distinctes, à un ordinateur hôte (18), ledit convertisseur comprenant un module d'interface (30) destiné à convertir des données à transmettre ainsi qu'un module d'émission / réception (34) couplé au module d'interface (30), sachant que le module d'interface (30) est relié côté entré par une fiche hôte (24) à une interface hôte (16) de l'ordinateur hôte (18) et que le module d'émission / réception (34) peut être relié par une fiche appareil (28) à une interface appareil (12) de l'appareil d'automatisation (14), ainsi qu'un convertisseur de tension (46) pouvant être relié côté entrée par l'interface hôte (16) à la tension de fonctionnement et côté sortie à une ligne d'alimentation en tension (PS) de l'interface appareil (12), sachant qu'une tension de sortie du convertisseur de tension (46) est appliquée à la ligne d'alimentation en tension (PS) et sachant que l'appareil d'automatisation (14) est alimenté via la ligne d'alimentation en tension (PS) de l'interface appareil (12) par ladite tension de sortie,
**caractérisé en ce**
**que** le convertisseur de communication (10) présente un premier dispositif de mesure de courant / tension (48) destiné à détecter un courant ou une tension sur la ligne d'alimentation en tension (PS), un second dispositif de mesure de courant / tension (54) destiné à détecter un courant ou une tension sur une ligne de commande (CTRL) de l'interface appareil (12), ainsi qu'un moyen de commutation (60) destiné à ajuster l'impédance de la ligne de commande (CTRL), que le convertisseur de tension (46) est conçu sous forme d'un convertisseur de tension ajustable, sachant que la valeur de tension de sortie du convertisseur de tension (46) peut être ajustée successivement à une valeur supérieure au moyen d'une unité logique (40) intégrée dans le convertisseur de communication (10) en fonction de la valeur de courant / tension présente sur la ligne de commande (CTRL) et de la valeur de courant / tension présente sur la ligne d'alimentation en tension (PS), et que pendant l'augmentation successive de la tension de sortie, la valeur de courant / tension sur la ligne de commande (CTRL) est surveillée au moyen du second dispositif de mesure de courant / tension (54), de façon à ce que, lorsque la valeur de courant / tension sur la ligne de commande (CTRL) a atteint une valeur de tension définie, ladite ligne est correctement ajustée à la tension de fonctionnement nécessaire pour l'appareil d'automatisation (14) raccordé.

2. Convertisseur de communication selon la revendication 1,
**caractérisé en ce**
**qu'**une sortie (42) de l'unité logique (40) est raccordée à une entrée de commande (44) du convertisseur de tension (46) et qu'une sortie du convertisseur de tension (46) est rétrocouplée via le premier dispositif de mesure de courant / tension (48) à une entrée (50) de l'unité logique (40).

3. Convertisseur de communication selon la revendication 1 ou 2,
**caractérisé en ce**
**que** la ligne de commande (CTRL) est raccordée via le second dispositif de mesure de courant / tension (54) à une entrée (56) de l'unité logique (40).

4. Convertisseur de communication selon au moins l'une des précédentes revendications,
**caractérisé en ce**
**que** la ligne de commande (CTRL) peut être ajustée à l'aide d'un moyen de commutation tel qu'un commutateur d'impédance (60) - piloté par une sortie (58) de l'unité logique - d'une faible impédance (Z) à une impédance élevée (Z) et inversement.

5. Procédé d'ajustage d'une tension de sortie d'un convertisseur de communication (10) pour le raccord d'appareils d'automatisation (14) présentant des tensions de fonctionnement distinctes à un ordinateur hôte (18), sachant que le convertisseur de communication (10) comprend un module d'interface (30) destiné à la conversion des données devant être transférées, ainsi qu'un module d'émission / réception (34) couplé au module d'interface (30) et sachant que le module d'interface (30) côté entrée est relié par une fiche hôte à une interface hôte de l'ordinateur hôte et que le module d'émission / réception est relié par une fiche appareil de l'appareil d'automatisation, que ledit convertisseur de communication comprend également un convertisseur de tension (46), lequel est alimenté côté entrée en tension de fonctionnement par l'interface hôte et qui, côté sortie, alimente l'appareil d'automatisation en tension de sortie via une ligne d'alimentation en tension (PS) de l'interface appareil (12),
**caractérisé en ce**
**que**, au moyen d'une unité logique (40) intégrée dans le convertisseur de communication, un état de signal est détecté sur la ligne d'alimentation en tension (PS) de l'interface appareil (12), ainsi que sur une ligne de commande (CTRL) de l'interface appareil (12) et que, selon les valeurs de courant / tension sur la ligne de commande (CTRL) et sur la ligne d'alimentation en tension (PS), la tension de sortie du convertisseur de tension (46) est ajustée à la tension de fonctionnement de l'appareil d'automatisation raccordé (14), sachant qu'en partant d'une faible valeur de tension, la tension de sortie est augmentée successivement par le biais de l'unité logique (40) et du convertisseur de tension ajustable (46), une valeur de tension sur la ligne de commande (CTRL) étant simultanément surveillée, de façon à ce que lorsque la valeur de tension sur la ligne de commande (CTRL) a atteint une valeur de tension définie, ladite ligne est correctement ajustée à la tension de fonctionnement nécessaire pour l'appareil d'automatisation (14) raccordé.

6. Procédé selon la revendication 5,
**caractérisé en ce**
**qu'**une unité de mesure de courant / tension (48) détecte un flux de courant sur la ligne d'alimentation en tension (PS).

7. Procédé selon l'une des revendications 5 à 6,
**caractérisé en ce**
**qu'**un rapport entre la tension de sortie du convertisseur (10) présente sur la ligne d'alimentation en tension (PS) et une valeur de tension détectée sur la ligne de commande (CTRL), est exploité afin de faire la distinction entre différents types d'appareils d'automatisation (14).

8. Procédé selon l'une des revendications 5 à 7,
**caractérisé en ce**
**que** la valeur de la tension de sortie est augmentée à une valeur de tension immédiatement supérieure lorsque la valeur de tension sur la ligne de commande (CTRL) est supérieure à zéro volt et inférieure à la valeur de tension définie.

9. Procédé selon l'une des revendications 5 à 8,
**caractérisé en ce**
**que** le courant est surveillé via la ligne d'alimentation en tension (PS) et utilisé afin de détecter si le convertisseur de communication (10) a été séparé de l'appareil d'automatisation (14).
